# EUROPÄISCHE PATENTSCHRIFT

(11) **EP 2 644 926 B1**
(45) Veröffentlichungstag und Bekanntmachung des Hinweises auf die Patenterteilung: **07.09.2016**
(21) Anmeldenummer: 13160539.6
(22) Anmeldetag: 22.03.2013
(51) Int. Cl.: F16D 55/225, F16D 65/097, F16D 65/092, F16D 65/18

(54) **Scheibenbremse mit Rückstelleinrichtung und entsprechender Bremsbelag**
Disc brake comprising a reset mechanism, and corresponding brake lining
Frein à disque avec dispositif de rappel et garniture de frein correspondante

(30) Priorität: 26.03.2012 DE 102012006082
(43) Veröffentlichungstag der Anmeldung: 02.10.2013
(73) Patentinhaber: KNORR-BREMSE Systeme für Nutzfahrzeuge GmbH, 80809 München (DE)
(72) Erfinder: Baumgartner, Johann, 85368 Moosburg (DE)
(74) Vertreter: Schönmann, Kurt

(56) Entgegenhaltungen:
- EP-A2- 1 010 913
- US-A- 4 364 455
- US-A- 4 444 296
- US-A- 5 284 228
- US-A1- 2006 175 161

## Beschreibung

Die Erfindung betrifft eine Scheibenbremse, insbesondere für ein Kraftfahrzeug, nach dem Oberbegriff des Anspruchs 1. Die Erfindung bezieht sich auch auf einen entsprechenden Bremsbelag.

Derartige Scheibenbremsen sind üblicherweise druckluftbetätigt und mit automatisch wirkenden, mechanischen Belagverschleißnachstellvorrichtungen ausgestattet. Diese Belagverschleißnachstellvorrichtungen verkleinern ein zu groß gewordenes Lüftspiel.

Restschleifmomente der Radbremsen, insbesondere von Scheibenbremsen, können bei kombinierten Schwerlastfahrzeugen bis zu 1 % höheren Kraftstoffverbrauch führen. Darüber hinaus tritt infolge des ständigen Schleifens der Bremsbeläge ein erhöhter Bremsbelagverschleiß ein, wodurch die Wartungskosten des Fahrzeugs erhöht werden. Ursache dieser Restschleifmomente ist ein nicht vollständiges Lösen der Bremsbeläge von der Bremsscheibe nach einem Bremsvorgang.

Zur Vermeidung dieser Restschleifmomente ist es erforderlich, beim Lösen der Bremse nach einer vorhergehenden Bremsung durch aktives Zurückziehen der Bremsbeläge einen Mindestluftspalt (Mindestlüftspiel) zwischen den Reibflächen der Bremsbeläge und der Bremsscheibenreibfläche herzustellen. Hierzu sind unterschiedliche Methoden bekannt.

Bei Festsattel-Scheibenbremsen, welche eine feststehende Position von Bremssattel und Bremsscheibe aufweisen, ist es ausreichend, die Bremsbeläge mit dem auf den jeweiligen Bremsbelag einwirkenden Betätigungskolben so zu verbinden, dass die Betätigungskolben beim Lösen der Bremse die Bremsbeläge in ihrer Rückzugbewegung mitnehmen und auf diese Weise das Lüftspiel zwischen Bremsbelägen und Bremsscheibe wiederherstellen. Mit dieser Maßnahme ist bei Festsattel-Scheibenbremsen eine weitgehende Vermeidung von Restschleifmomenten möglich.

Bei Schiebesattel-Scheibenbremsen kann dagegen ein ausreichendes Lösen der Bremsbeläge nicht allein durch eine rückzugsfähige Anbindung derselben an die Betätigungskolben bzw. an den Sattelrücken erzielt werden, da der Bremssattel in seiner Schiebeführung frei beweglich bleibt. Das kann dazu führen, dass einer der beiden Bremsbeläge, in der Regel der sattelseitige Bremsbelag, noch mit der Bremsscheibe in Schleifkontakt bleibt.

Bei Schiebesattel-Scheibenbremsen wird deshalb in Betracht gezogen, dem Bremssattel im nicht betätigten Zustand mit Hilfe von an den Schiebführungen angeordneten Klemmelementen eine quasi fixe Position zu geben, wodurch eine beidseitige Lüftspieleinstellung ermöglicht wird. Dies illustriert DE 10 2007 001 213 B4. Diese Lösung ist relativ aufwendig und kann störungsanfällig sein. Insbesondere in der Anwendung bei druckluftbetätigten Scheibenbremsen für schwere Nutzfahrzeuge kann dies mit in weiten Grenzen variablen Einflüssen durch Bauteiltoleranzen und Bauteildeformationen behaftet sein, was der Anwendung dieser Methode im Wege steht (Belagkompressibilität, Verschleißzustand der Beläge, Sattelverformung, Ansprechkraft der Nachstelleinrichtung, Klemmkraft des Klemmrings, Kraft der Rückstellfeder).

DE 22 30 949 C3 beschreibt eine Bremsbackenführung für eine Teilbelag-Scheibenbremse, bei welcher der Einfluss des Schiebesattels und damit seiner Bauteiltoleranzen weitgehend ausgeschlossen wird. Hierbei wird der Bremsbelag über Klemmelemente direkt reibschlüssig gegen die Führungsflächen des ortsfesten Bremsträgers abgestützt. Bei Betätigung der Bremse werden die Klemmelemente durch die Spreizkraft einer Blattfeder an diesen Führungsflächen gehalten, während der Bremsbelag unter Einwirkung der Betätigungskraft der Bremse eine begrenzte Bewegung ausführen kann, um in ausreichenden Reibkontakt mit der Bremsscheibe zu kommen. Nach der Bremsbetätigung wird der Bremsbelag durch die einerseits an diesem und andererseits an den Klemmelementen befestigte Blattfeder in seine Ausgangsposition zurückgezogen und so das Lüftspiel hergestellt. Bei Auftreten von Belag- und/oder Bremsscheibenverschleiß erreicht die Belagträgerplatte bei Bremsbetätigungen die Anschläge an den Wegbegrenzungen der Klemmelemente, wodurch diese unter Einwirkung der Betätigungskraft der Bremse gegen ihre Klemmkraft um einen dem eingetretenen Verschleiß entsprechenden Betrag in Richtung Bremsscheibe verschoben werden.

Auch diese einfach und praktikabel erscheinende Methode hat keine nennenswerte Anwendung gefunden. Die Klemmelemente können anfällig für Verschmutzung und Korrosion sein. Bei auftretenden Vibrationen können sie starken Belastungen durch den Bremsbelag ausgesetzt sein. Zudem können die Klemmelemente durch Festrosten/Blockieren die Wirkung der Bremse beeinträchtigen. Für die Anwendung in schweren Nutzfahrzeugen ist diese Lösung deshalb nicht geeignet.

Das Dokument US 5 284 228 A beschreibt eine Scheibenbremse mit einem Teilbelag und einem Schwimmsattel. Es ist eine Vorrichtung vorgesehen, welche den indirekt betätigten, externen Bremsbelag zurückzieht, um ein Lüftspiel mit der Bremsscheibe herzustellen. Dazu ist jeweils ein Paar elastischer Federelemente pro Bremsbelag vorgesehen, welche mit dem externen Bremsbelag und den Trägerarmen des Bremsträgers in Eingriff stehen, und welche bei einer Betätigung der Bremse elastisch gespannt werden. Dadurch wird eine Rückstellung des externen Bremsbelags ermöglicht, wenn sich diese Elemente bei Lösen der Bremse entspannen. Die Federelemente sind so angebracht, dass ein reibschlüssiger Eingriff überwunden werden kann, um die relative entspannte Position des Federelementes und des externen Bremsbelags im Falle von Verschleiß zu verschieben, so dass ein konstantes Lüftspiel beibehalten wird.

Die Aufgabe der vorliegenden Erfindung besteht darin, eine verbesserte Scheibenbremse zu schaffen.

Eine weitere Aufgabe ist es, einen verbesserten Bremsbelag für eine Scheibenbremse bereitzustellen.

Die Aufgabe wird durch eine Scheibenbremse mit den Merkmalen des Anspruchs 1, und einen Bremsbelag mit den Merkmalen des Anspruchs 11 gelöst.

Die erfindungsgemäße Scheibenbremse weist jeweils eine Rückstelleinrichtung für jeden Bremsbelag auf, deren Lösefunktion nicht durch den Bremssattel beeinflusst wird. Die Rückstelleinrichtungen weisen einen einfachen Aufbau und hohe Robustheit auf. Eine Störung in der Wirkung der Rückstelleinrichtungen ruft keine Beeinflussung der Scheibenbremse hervor. Die Scheibenbremse kann druckluftbetätigt sein und ist besonders für schwere Nutzfahrzeuge geeignet, wobei Restschleifmomente und unnötiger Bremsbelagverschleiß vermieden wird.

Eine erfindungsgemäße Scheibenbremse insbesondere für ein Kraftfahrzeug, umfasst eine Zuspannvorrichtung, einen eine Bremsscheibe übergreifenden Bremssattel, insbesondere ein Schiebesattel, vorzugsweise eine Belagverschleißnachstellvorrichtung, einen Bremsträger mit in Umfangsrichtung der Bremsscheibe gegenüberliegenden Führungsflächen, zwischen welchen beidseitig der Bremsscheibe jeweils mindestens ein Bremsbelag mit einem Belagträger parallel zu einer Drehachse der Bremsscheibe verschiebbar geführt und von einer Zuspannkraft betätigbar ist, und jeweils eine Rückstelleinrichtung, welche den jeweils mindestens einen Bremsbelag mit dem Belagträger mit jeweils mindestens einem Rückstellabschnitt an jeder Führungsfläche abstützt. Jede Rückstelleinrichtung umfasst mindestens zwei Rückstellelemente, die an dem Rücken des Belagträgers des jeweils mindestens einen Bremsbelags angebracht sind, wobei die Rückstelleinrichtungen auf unterschiedlichen Seiten der Bremsscheibe unterschiedlich hohe Rückstellkräfte aufweisen.

Durch die Anwendung geeigneter Rückstellelemente können weitere störanfällige Bauteile, wie z.B. Klemmelemente, vermieden werden und die Bauteilanzahl wird verringert.

Weitere vorteilhafte Ausgestaltungen sind in den Unteransprüchen angegeben.

Es ist vorgesehen, dass jedes der mindestens zwei Rückstellelemente den jeweils mindestens einen Rückstellabschnitt aufweist. Dabei werden keine Zusatzbauteile benötigt.

In einer Ausführung ist jedes der mindestens zwei Rückstellelemente mit einem Befestigungsabschnitt und einem Federabschnitt ausgebildet, wobei der Federabschnitt an seinem freien Ende den Rückstellabschnitt aufweist. Das Rückstellelement kann somit auch ein Federarm sein. Ein oder mehrere Federarme, vorzugsweise Blattfedern, sind am Bremsbelagträger oder Bremsbelagrücken befestigt.

In einer weiteren Ausführung ist der Rückstellabschnitt mit einer scharfen Kante als Krallkante ausgebildet. Zudem ragt der mindestens eine Rückstellabschnitt jedes Rückstellelementes in Längsrichtung des Belagträgers über eine Belagträgerseite geringfügig zu der jeweiligen Führungsfläche des Bremsträgers hinaus und steht mit der Krallkante mit der Führungsfläche des Bremsträgers in Eingriff.

Die Federarme werden durch ihre Spannkraft mit dem hinausragenden Überstand gegenüber den umfangsseitigen Abstützflächen des Rückens des Belagträgers an die Führungsflächen des Bremsträgers angepresst und verkrallen sich mit der Krallkante gegen diese Führungsflächen zur Abstützung von Rückzugskräften.

In einer weiteren Ausführung ist jedes der mindestens zwei Rückstellelemente mit dem Befestigungsabschnitt auf dem Belagträger befestigt, und der Federabschnitt steht mindestens teilweise von dem Belagträger federnd hervor. Die Federarme, d.h. die Rückstellelemente, sind mit einer Vorspannkraft gegen den Rücken des Belagträgers angelegt, so dass, wenn bei Betätigung der Bremse der Bremsbelag verschoben wird, dieser von dem an den Führungsflächen des Bremsträgers verkrallten Rückstellabschnitt unter Überwindung der Vorspannkraft abhebt.

Nach Beendigung des Bremsvorgangs bzw. der Zuspannung der Bremse wirkt diese Vorspannkraft rückstellend auf den Bremsbelag und bewegt diesen, unter Wiederherstellung eines Lüftspiels zwischen Bremsbelag und Bremsscheibe, in seine Ausgangsposition zurück.

In einer anderen Ausführung ist vorgesehen, dass eine Hubbewegung einer möglichen Ausfederung des Federabschnitts durch ein Begrenzungselement, ein Druckstück, eine Druckplatte oder einen Sattelrücken begrenzt ist. Damit kann die Hubbewegung einer möglichen Ausfederung des Federabschnitts auf einen maximal erforderlichen Arbeitshub des Bremsbelags begrenzt werden. Der maximal erforderliche Arbeitshub des Bremsbelags ist das Lüftspiel plus eine Belagverpressung.

In einer noch anderen Ausführung ist jedes der mindestens zwei Rückstellelemente in einer Vertiefung des Belagträgers angeordnet. So kann bei nicht betätigter Bremse kein Überstand über den Belagrücken auftreten.

Die Rückstelleinrichtungen weisen auf unterschiedlichen Seiten der Bremsscheibe unterschiedlich hohe Rückstellkräfte auf. Daraus kann sich eine gleichmäßige Aufteilung der beidseitigen Lüftspiele ergeben. Außerdem können z.B. die Rückstellelemente als Krallfedern zusätzlich auch mit unterschiedlicher steifer Charakteristik ausgebildet sein. Dies ermöglicht, dass das Rückstellelement mit dem größeren Hub einen stärkeren Kräfteabfall verzeichnet, wodurch eine die Lüftspiele ausgleichende Wirkung auftritt.

Die Scheibenbremse kann druckluftbetätigt sein.

Ein entsprechender Bremsbelag einer Scheibenbremse ist mit einer oben beschriebenen Rückstelleinrichtung ausgestattet.

Die Erfindung wird nun anhand beispielhafter Ausführungen mit Bezug auf die beigefügten Zeichnungen näher erläutert. Hierbei zeigen:
- Fig. 1-2: schematische Teilschnittansichten eines Ausführungsbeispiels einer erfindungsgemäßen Scheibenbremse mit einer Rückstelleinrichtung und einem beispielhaften erfindungsgemäßen Bremsbelag in verschiedenen Stellungen;
- Fig. 3: eine schematische Längsschnittansicht eines beispielhaften Rückstellelementes;
- Fig. 4: eine schematische Draufsicht des Rückstellelementes nach Fig. 3;
- Fig. 5-6: schematische Teilschnittansichten der erfindungsgemäßen Scheibenbremse mit einer Variante des beispielhaften erfindungsgemäßen Bremsbelags in verschiedenen Stellungen;
- Fig. 7: eine schematische Draufsicht auf einen Belagträgerrücken einer weiteren Variante des beispielhaften erfindungsgemäßen Bremsbelags;
- Fig. 8: eine vergrößerte Teilschnittansicht der weiteren Variante nach Fig. 7; und
- Fig. 9-10: schematische Teilschnittansichten der erfindungsgemäßen Scheibenbremse mit einer noch weiteren Variante des beispielhaften erfindungsgemäßen Bremsbelags in verschiedenen Stellungen.

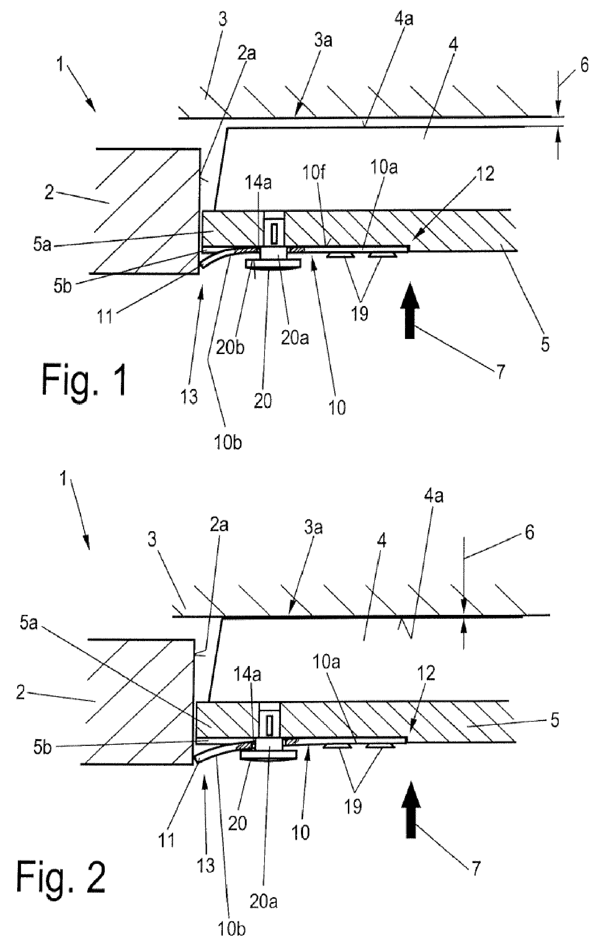

In Fig. 1 ist eine schematische Schnittansicht eines ersten Ausführungsbeispiels einer erfindungsgemäßen Scheibenbremse 1 mit einer Rückstelleinrichtung und einem beispielhaften erfindungsgemäßen Bremsbelag 4 in einer gelösten, d.h. unbetätigten Stellung dargestellt. Diese Stellung wird auch als Ausgangsposition bezeichnet. Fig. 2 zeigt dazu die schematische Teilschnittansicht nach Fig. 2 mit dem erfindungsgemäßen Bremsbelag 4 in einer zugespannten bzw. betätigten Stellung.

Die Scheibenbremse 1 ist hier in einer Teilansicht mit einem Bremsträger 2, einer Bremsscheibe 3 und dem Bremsbelag 4 gezeigt. Ein nicht gezeigter Bremssattel übergreift die Bremsscheibe 3, an welcher beidseitig Bremsbeläge angeordnet sind, von denen nur der eine Bremsbelag 4 mit einem Belagträger 5 zum Teil dargestellt ist. Beispielsweise ist der Bremsbelag 4 auf der Zuspannseite der Scheibenbremse angeordnet und der andere nicht gezeigte Bremsbelag auf der anderen Seite der Bremsscheibe 3 im Bremssattel angebracht. Der Bremssattel kann beispielsweise ein Schiebesattel sein. Die Scheibenbremse 1 kann z.B. als druckluftbetätigte Scheibenbremse 1 ausgeführt sein.

Die Darstellungen und Ausführungen hinsichtlich des Bremsbelags 4 gelten somit auch für den nicht gezeigten anderen Bremsbelag der Scheibenbremse 1, was leicht vorstellbar ist.

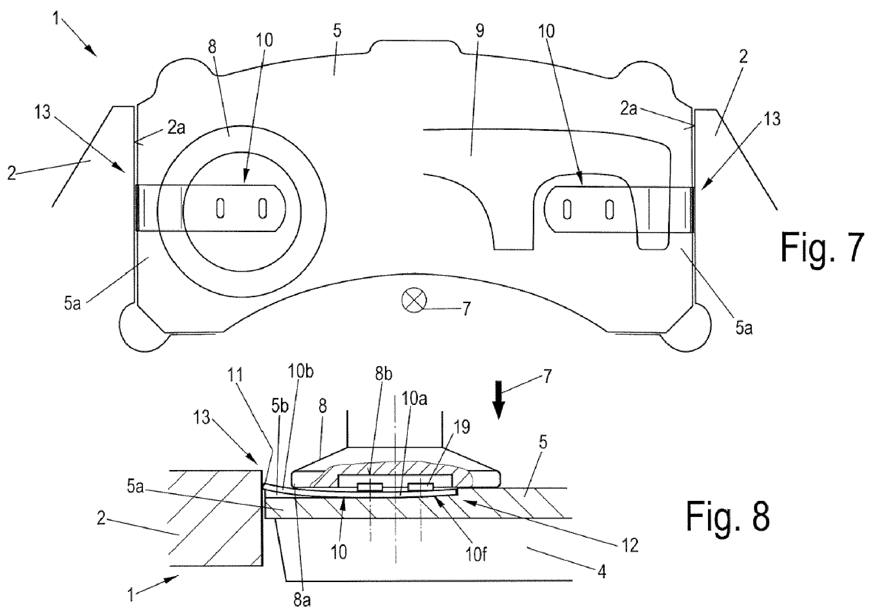

Der Bremsbelag 4 ist mit seinem Belagträger 5 zwischen Führungsflächen 2a des Bremsträgers 2 in einer Zustellrichtung 7, die mit einem Pfeil gekennzeichnet ist, reversibel verschiebbar geführt (siehe auch Fig. 7). Die Zustellrichtung 7 verläuft parallel zu einer Drehachse der Bremsscheibe 3. Eine Längsrichtung des Belagträgers 5 verläuft tangential zur Bremsscheibe 3, d.h. eine gedachte Linie zwischen den Führungsflächen 2a, die senkrecht auf diesen steht. Senkrecht zu dieser Längsrichtung erstreckt sich der Belagträger 5 in radialer Richtung der Bremsscheibe 3.

Eine Bremsscheibenreibfläche 3a der Bremsscheibe 3 steht einer Belagreibfläche 4a des Bremsbelags 4 gegenüber. Ein Abstand zwischen dem Bremsbelag bzw. den Bremsbelägen und der Bremsscheibe wird als Lüftspiel 6 bezeichnet. Bei einem Bremsvorgang wird bei Betätigung der Scheibenbremse 1 zunächst das Lüftspiel 6 überbrückt, indem der Bremsbelag 4 aus der Ausgangsposition (Fig. 1) gegen die Bremsscheibe 3 in Zustellrichtung 7 zugespannt wird. Aufgrund des Verschleißes der Bremsbeläge und auch der Bremsscheibe 3 vergrößert sich das Lüftspiel 6.

Beim zugespannten Bremsbelag 4 ist das Lüftspiel 6 zu Null geworden, wobei der Bremsbelag 4 an der Bremsscheibe 3 der Scheibenbremse 1 anliegt. Das Lüftspiel 6 ist in dieser zugespannten Stellung, die Fig. 2 zeigt, überbrückt. Weiteres Zuspannen bewirkt dann durch Anpressen des Bremsbelags an die Bremsscheibe eine Bremsung. Ein Lösen der Zuspannvorrichtung bewirkt eine Umkehrung des oben beschriebenen Vorgangs.

Die Rückstelleinrichtung dient zur Rückstellung des Bremsbelags 4 aus der zugespannten Stellung in die gelöste Stellung, d.h. in die Ausgangsposition nach Fig. 1, um somit ein ausreichendes Lösen des Bremsbelags 4 von der Bremsscheibe 3 zu erreichen. Damit wird das Lüftspiel 6 wiederhergestellt. Ein Nachstellen des Bremsbelags 4 aufgrund von Verschleiß zur Einstellung des Lüftspiels 6 auf einen vorher festgelegten Wert wird z.B. von einer Nachstellvorrichtung vorgenommen, die hier nicht weiter erläutert wird.

Die Rückstelleinrichtung umfasst in diesem Ausführungsbeispiel zwei Rückstellelemente 10, die an dem Belagrücken des Bremsbelags 4, hier an dem Rücken des Belagträgers 5 angebracht sind. Der Rücken des Belagträgers 5 ist die Seite des Belagträgers 5, welche der mit dem Bremsbelag 4 bestückten Seite des Belagträgers 5 abgewandt ist. Jedes Rückstellelement 10 ist hier ein Federelement, das in Gestalt einer Blattfeder als eine so genannte Krallfeder mit einer Krallkante 11 an einem Endbereich ausgebildet ist. Die Krallkante 11 ist z.B. eine scharfe Kante, die durch Schleifen oder Stanzen hergestellt ist.

Dieses Rückstellelement 10 ist so an dem Rücken des Belagträgers 5 befestigt, dass es mit seiner Vorspannung gegen den Bremsbelagrücken, also den Rücken des Belagträgers 5 drückt. In dem in Fig. 1 und 2 dargestellten Ausführungsbeispiel ist jeweils ein Rückstellelement 10 in eine nutförmige Vertiefung 5b eingebracht, die jeweils auf einer Belagträgerseite 5a angeordnet ist. Dabei liegt das Rückstellelement 10 mit einem großen Teil eines Rückenabschnitts 10f an dem Belagträger 5 an. Das Rückstellelement 10 ist auf diese Weise mit der Fläche des Rückens des Belagträgers 5 bündig, so dass bei nicht betätigter Scheibenbremse 1 kein Überstand über den Rücken des Belagträgers 5 auftritt.

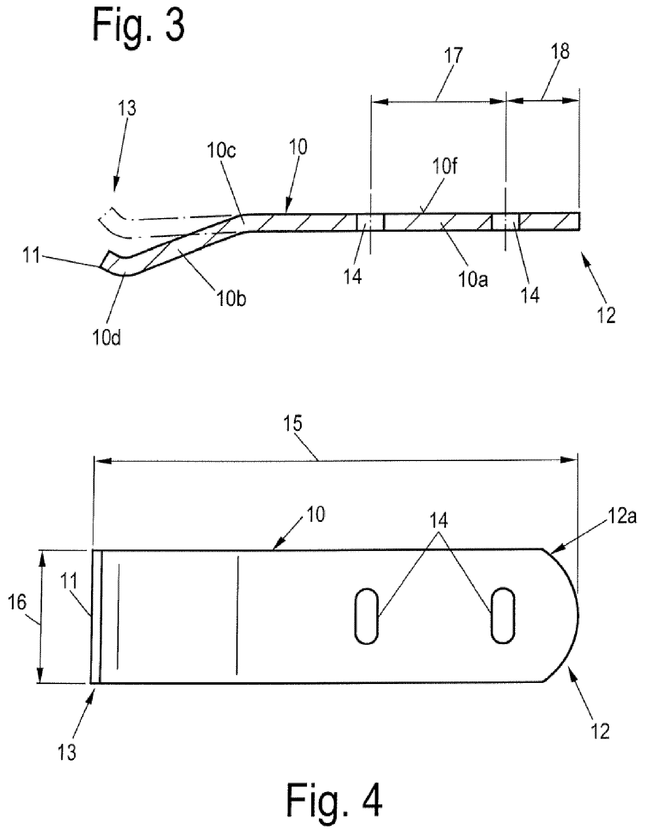

Jede Vertiefung 5b weist ein offenes Ende an jeder Belagträgerseite 5a auf, das zur jeweiligen Führungsfläche 2a weist. Das Rückstellelement 10 ist mit einem Befestigungsabschnitt 10a in dem zur Mitte des Belagträgers 5 weisenden Bereich der Vertiefung 5b hier mit zwei Befestigungselementen 19, z.B. Nieten (hier: Flachnieten), die sich durch Befestigungslöcher erstrecken (siehe auch Fig. 3, 4), befestigt. Ein Befestigungsende 12 des Rückstellelementes 10 ist dabei in einem zur Mitte des Belagträgers 5 weisenden Endbereich der Vertiefung 5b angeordnet. Das andere Ende des Rückstellelementes 10 bildet einen Rückstellabschnitt 13, welcher in Längsrichtung des Bremsbelags 4 und des Belagträgers 5 über die Belagträgerseite 5a geringfügig zu der umfangsseitigen Abstütz- bzw. Führungsfläche 2a des Bremsträgers 2 hinausragt und mit der Krallkante 11 mit der Führungsfläche 2a des Bremsträgers 2 in Eingriff steht.

Der Rückstellabschnitt 13 des Rückstellelementes 10 ist über einen Federabschnitt 10b (siehe Fig. 3) mit dem Befestigungsabschnitt 10a verbunden und ist gebogen ausgebildet, wodurch das Rückstellende 13 vom Belagträger 5 abgebogen ist und entgegen der Zustellrichtung 7 vorsteht. Der Federabschnitt 10b weist einen Durchbruch 14a auf, die von einem als Hubbegrenzung wirkenden Begrenzungselement 20 durchdrungen ist. Das Begrenzungselement 20 ist hier als Bolzen mit einem Führungsabschnitt 20a und einem Kopf mit einer Anlagefläche 20b ausgebildet und in dem Belagträger 5 befestigt. Der Führungsabschnitt 20a durchdringt den Durchbruch 14a des Rückstellelementes 10 und weist eine Länge auf, die den Hub des Federabschnitts 10b begrenzt.

Der Rückenabschnitt 10f liegt im Bereich des Befestigungsabschnitts 10a fest und ständig an dem Belagträger 5 an, während der sich zum Rückstellabschnitt 13 erstreckende Rückenabschnitt 10f in einen Bereich um den Durchbruch 14a herum aufgrund der Vorspannkraft in der Vertiefung 5b am Belagträger 5 anliegt, aber sich davon abheben kann. Der Rückenabschnitt 10f im Bereich des abgebogenen Teils einschließlich des Rückstellabschnitts 13 liegt nicht am Belagträger 5 an.

In der unbetätigten Stellung nach Fig. 1 liegt der Federabschnitt 10b um den Durchbruch 14a herum in der Vertiefung 5b an dem Belagträger 5 an. Bei zugespannter Scheibenbremse 1 nach Fig. 2 wird die mögliche Ausfederung des Rückstellelementes 10 auf den maximal erforderlichen Arbeitshub des Bremsbelags 4 durch den Bolzenkopf des Begrenzungselementes 20 begrenzt. Unter dem Arbeitshub des Bremsbelags 4 ist das Lüftspiel 6 plus eine so genannte Belagverpressung zu verstehen.

Bei Zuspannung bzw. Betätigung der Scheibenbremse 1 wird der Bremsbelag 4 (einschließlich Belagträger 5) in Zustellrichtung 7 in Richtung Bremsscheibe 3 verschoben, während die Krallkante 11 des Rückstellelementes 10 unter Einwirkung einer Vorspannkraft des Rückstellelementes 10 an der Führungsfläche 2a des Bremsträgers 2 gehalten wird, was in Fig. 2 zu sehen ist. Dabei ist der Rückenabschnitt 10f in dem Bereich um den Durchbruch 14a herum von dem Belagträger 5 abgehoben und das Rückstellelement 10 liegt mit einem Teil des Bereiches seiner Oberseite um den Durchbruch 14a herum an der Anlagefläche 20b an, wodurch die Hubbegrenzung erfolgt.

Nach der Bremsbetätigung wirkt diese Vorspannkraft des Rückstellelementes 10 rückstellend auf den Bremsbelag 4 und bewegt denselben in seine in Fig. 1 gezeigte Ausgangsposition zurück. Dabei legt sich das Rückstellelement 10 aufgrund seiner Vorspannung wieder mit dem abgehobenen Teil seines Rückenabschnitts 10f an den Rücken des Belagträgers 5 an.

Nun wird eine Rückstellfunktion der Rückstelleinrichtung beschrieben. Wenn bei einem aufgetretenen Bremsenverschleiß der ausgeführte Hub des Bremsbelags 4 den Betrag eines Mindestlüftspiels plus maximal möglicher Belagverpressung übersteigt, rutscht der Rückstellabschnitt 13 mit der Krallkante 11 des Rückstellelementes 10 unter Einwirkung der Zuspannkraft der Scheibenbremse 1 um den Betrag des aufgetretenen Verschleißes weiter in Zustellrichtung 7 und nimmt eine neue Ausgangsposition ein. D.h., die neue Ausgangsposition des Bremsbelags 4 befindet sich in Zustellrichtung 7 näher an der Bremsscheibe 3.

Fig. 3 zeigt eine schematische Längsschnittansicht eines beispielhaften Rückstellelementes 10, und Fig. 4 stellt eine schematische Draufsicht des Rückstellelementes nach 10 Fig. 3 dar.

Das Rückstellelement 10 nach Fig. 3 ist in einer möglichen Ausführungsform als Krallfeder gezeigt. Von dem in Fig. 3 rechts liegenden Befestigungsende 12 ausgehend erstreckt sich das Rückstellelement 10 nach links zunächst in dem Befestigungsabschnitt 10a, welcher zwei Befestigungslöcher 14 für die Befestigungselemente 19 aufweist. Hier sind die Befestigungslöcher 14 als Langlöcher geformt (Fig. 4).

Der Befestigungsabschnitt 10a geht dann über einen nach unten verlaufenden Bogenabschnitt 10c in den Federabschnitt 10b über, an den sich ein weiterer, nach oben verlaufender Bogenabschnitt 10d anschließt, welcher den Rückstellabschnitt 13 mit der Krallkante 11 bildet. Die Krallkante 11 ist hier nur symbolisch dargestellt, sie kann natürlich auf unterschiedliche Art ausgebildet sein, z.B. eine gestanzte oder scharf geschliffene Kante.

Der Rückstellabschnitt 13 als Endbereich dieser Ausführungsform der Krallfeder ist dabei so gestaltet, dass bei Auftreten von Maßtoleranzen eine ausreichende Elastizität besteht, um eine Anpresskraft der Krallkante 11 gegen die Führungsfläche 2a des Bremsträgers 2 in vorgegebenen Grenzen aufrechtzuerhalten.

Der strichpunktiert gezeichnete Rückstellabschnitt 13 deutet die ungespannte Form der Krallfeder an.

In Fig. 4 ist erkennbar, dass das Befestigungsende 12 mit einem Endradius 12a versehen ist. Dadurch kann das Befestigungsende 12 einen Formschluss mit dem Ende einer durch z.B. einen Fräser erzeugten Vertiefung 5b bilden, wenn der Endradius 12a an denjenigen des Fräsers angepasst ist.

Ein Ausführungsbeispiel der Krallfeder kann so ausgestaltet sein, dass eine Länge 15 z.B. dem 3,5fachen einer Breite 16 der Krallfeder entspricht. Die Größe des Befestigungsabschnitts 10a ist durch ein Befestigungsmaß 17, das dem Abstand der Befestigungslöcher 14 in Längsrichtung der Krallfeder entspricht, und durch ein Befestigungsmaß 18, welches der Abstand vom Befestigungsende 12 in Längsrichtung der Krallfeder zum nächstliegenden Befestigungsloch 14 ist, festlegt. Dabei kann das Befestigungsmaß 17 z.B. das Doppelte des Befestigungsmaßes 18 betragen.

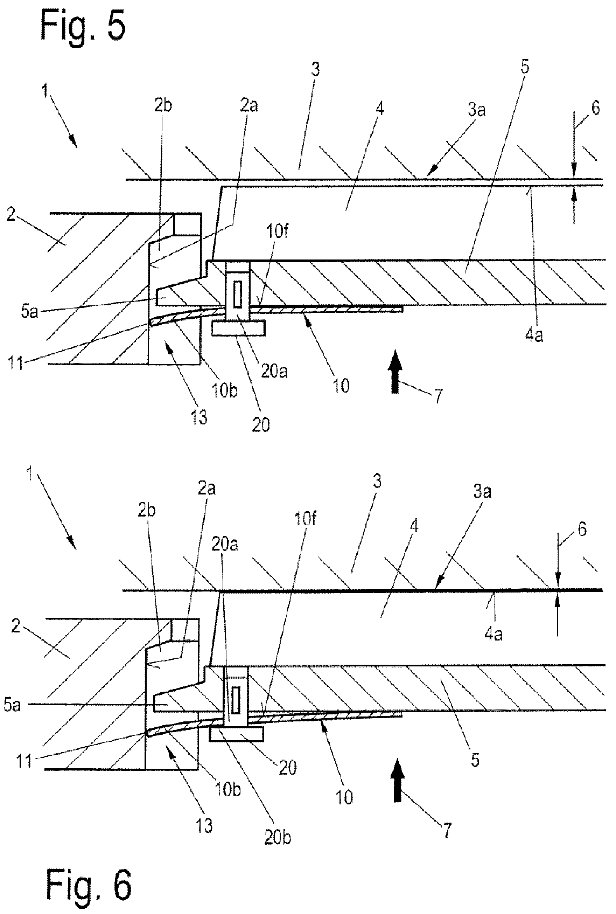

In Fig. 5 ist eine schematische Teilschnittansicht der erfindungsgemäßen Scheibenbremse mit der Rückstelleinrichtung mit einer Variante des beispielhaften erfindungsgemäßen Bremsbelags 4 in der Ausgangsposition gezeigt. Fig. 6 zeigt dazu die schematische Teilschnittansicht nach Fig. 5 mit der Variante in einer zugespannten bzw. betätigten Stellung.

Der Belagträger 5 weist in dieser Variante abgeschrägte Belagträgerseiten 5b auf, welche mit einer Belagstopperführung 2b des Bremsträgers 2 korrespondieren, wobei die Belagstopperführung 2b bremsscheibenseitig nicht näher bezeichnete Belagstopper aufweist. Auch diese Variante mit Belagstoppern kann mit der Rückstelleinrichtung versehen werden. Dazu ist das Rückstellelement 10 des Ausführungsbeispiels nach Fig. 1, 2 hier direkt auf dem Rücken des Belagträgers 5 befestigt, z.B. mit nicht gezeigten Nieten wie in Fig. 1, 2. Die Hubbegrenzung des Rückstellelementes 10 ist ebenfalls wie in Fig. 1, 2 mittels des Begrenzungselementes 20 gebildet. Der Rückstellabschnitt 13 des Rückstellelementes 10 ist mit der Krallkante 11 versehen, wobei die Rückstellfunktion bereits oben beschrieben ist. Natürlich kann das Rückstellelement 10 auch in einer hier nicht gezeigten Vertiefung 5b des Belagträgers 5 angeordnet sein.

Fig. 7 zeigt eine schematische Draufsicht auf einen Belagträgerrücken einer weiteren Variante des beispielhaften erfindungsgemäßen Bremsbelags 4, und Fig. 8 stellt eine vergrößerte Teilschnittansicht der weiteren Variante nach Fig. 7 dar.

Die Hubbegrenzung des Rückstellelementes 10 kann bei druckluftbetätigten Scheibenbremsen 1 mit einem mechanisch wirkenden Verschleißnachstellsystem auch auf eine einfache Weise durch ein Druckelement, z.B. zuspannseitig, durch ein Druckstück 8 oder eine Druckplatte, und sattelseitig (reaktionsseitig) durch die Andruckfläche eines Sattelrückens 9 des Bremssattels, realisiert sein.

In Fig. 7 ist ein Belagträger 5 des Bremsbelags 4 innerhalb der Führungsflächen 2a des Bremsträgers 2 gezeigt. Die Zustellrichtung 7 steht dabei senkrecht auf der Zeichnungsebene. Auf beiden Belagträgerseiten 5a ist jeweils ein Rückstellelement 10 nach Fig. 3, 4 befestigt. Die Befestigung ist nicht näher dargestellt, aber leicht vorstellbar. Die Rückstellabschnitte 13 der beiden Rückstellelemente 10 und diese selbst sind in etwa auf halber Länge (senkrecht zur Zustellrichtung 7) der Führungsflächen 2a angeordnet.

Auf der linken Seite in Fig. 7 ist das Druckstück 8 mit zwei konzentrischen Kreisen über dem Rückstellelement 10 angedeutet. Eine vergrößerte Teilschnittansicht dieses Bereiches zeigt Fig. 8. Das Rückstellelement 10 ist in die nutförmige Vertiefung 5b des Belagträgers 5 auf dem Belagträgerrücken aufgenommen und mit Befestigungselementen 19 befestigt. Das Rückstellelement 10 wird dabei von einem Anlageabschnitt 8a des Druckstücks 8 (Druckplatte) so überdeckt, dass nur der mit der Führungsfläche 2a des Bremsträgers 2 in Kontakt stehende Endbereich, hier der Federabschnitt 10b herausragt. Das Druckstück 8 weist eine Ausnehmung 8b auf, in welche Teile der Befestigungselemente 19 des Rückstellelementes 10 frei hervorstehen können.

In ähnlicher Weise gilt dies für die Sattelandruckfläche des Sattelrückens 9, der auf der rechten Seite der Fig. 7 beispielhaft angedeutet ist.

Die Tiefe der das Rückstellelement 10 aufnehmenden nutförmigen Vertiefung 5b ist so bemessen, dass der Bremsbelag 4/Belagträger 5 bei Betätigung der Scheibenbremse 1 gerade den notwendigen Arbeitshub ausführen kann. Dieser Arbeitshub setzt sich zusammen aus dem Mindestlüftspiel plus einer maximalen Belagverpressung. Die Nut kann in einer Ausführung von den Befestigungsstellen, d.h. vom Befestigungsende 12 des Rückstellelementes 10, ausgehend keilförmig verlaufen, um eine unnötige Schwächung des Belagträgers 5 zu vermeiden. Dabei liegt die notwendige Nuttiefe der Vertiefung 5b nur im Endbereich, d.h. im Bereich des Federabschnitts 10b des Rückstellelementes 10 vor.

Bei Überschreiten dieses notwendigen Arbeitshubes im Fall von eingetretenem Verschleiß erreicht die Anlagefläche des Druckstücks 8, nämlich der Anlageabschnitt 8a den Bereich des Rückenabschnitts 10fdes Federabschnitts 10b des Rückstellelementes 10 und verschiebt den Rückstellabschnitt gegen die Verkrallung der Krallkante 11 an der Führungsfläche 2a des Bremsträgers 2 um den Betrag des Verschleißes. In gleicher Weise wirkt die die Anlagefläche des Sattelrückens 9 mit den Rückstellelementen des reaktionsseitigen Bremsbelags 4/Belagträger 5 zusammen.

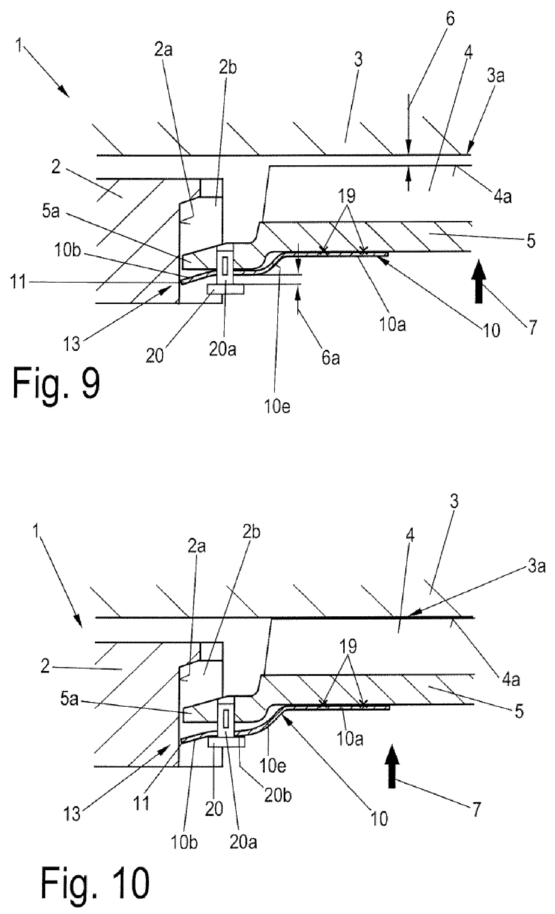

Schließlich zeigen Fig. 9 und 10 schematische Teilschnittansichten der erfindungsgemäßen Scheibenbremse 1 mit einer noch weiteren Variante des beispielhaften erfindungsgemäßen Bremsbelags 4 in verschiedenen Stellungen. In Fig. 9 ist die Ausgangsposition gezeigt, und Fig. 10 stellt die zugespannte Stellung dar.

In dieser Variante mit Belagstopper sind hier im Unterschied zu der Variante nach Fig. 5, 6 die Belagträgerseiten 5a gekröpft. Dementsprechend ist die Krallfeder als Rückstellelement 10 auch gekröpft ausgeführt, wobei der Befestigungsabschnitt 10a über einen schrägen, gekröpften und/oder gebogenen Zwischenabschnitt 10e mit dem Federabschnitt 10b verbunden ist. Die Hubbegrenzung ist wie oben beschrieben ausgebildet.

Nachfolgend wird der mindest notwendige, durch die Rückstelleinrichtung zu bewirkende Rückstellungshub oder Rückhub des Bremsbelags 4 für unterschiedliche Betriebszustände der Scheibenbremse 1 beispielhaft beschrieben. Die unterschiedlichen Anforderungen werden im Wesentlichen durch die je nach Verschleiß und Betriebszustand unterschiedliche Belagverpressung bestimmt.

Das zulässige Mindestlüftspiel pro Bremsbelag 4 wird z.B. mit 0,2 mm angenommen. Die bei maximaler Zuspannkraft erzeugte Belagverpressung beträgt bei hohen Betriebstemperaturen und unverschlissenem Bremsbelag 4 ca. 0,5 mm (Datenbasis Kompressibilitätsmessung Bremsbelag: Für verschiedene Bremsbelagqualitäten 250...300 pm Verpressung des neuen Bremsbelags 4 bei einer Flächenpressung von 500 N/cm² und Bremsbelagtemperatur 400°C). D.h., dass der Mindestrückhub mit 0,8 mm anzusetzen ist.

Die bei geringer Zuspannkraft, vollständig verschlissenen Bremsbelägen und kalter Bremse (<100 °C) entstehende Belagverpressung beträgt <0,1 mm.

Es können drei Extremzustände angenommen werden:
A) Neuzustand der Bremsbeläge 4 und Bremsbelagtemperatur 400 °C ⇒ Mindestrückhub 0,8 mm
B) Vollverschlissene Bremsbeläge 4 und Bremsbelagtemperatur <100 °C ⇒ Mindestrückhub 0,3 mm
C) Neuzustand der Bremsbeläge 4 und Bremsbelagtemperatur 100 °C Zustand der abgekühlten Scheibenbremse 1 nach einer Bremsung wie unter A) beschrieben.

### Zu A):

Ablauf einer Bremsung mit 400 °C Bremsbelagtemperatur und maximaler Bremsbelagdicke
a) am sattelseitigen Bremsbelag 4 (LS = Lüftspiel; VP = Verpressung)
   Ausgangszustand: LS 0,4 mm
   Betätigungshub: 0,4 mm LS + 0,5 mm VP = 0,9 mm
      ⇒ Die Krallfeder (Rückstellelement 10) rutscht 0,1 mm nach Rückhub Bremsbelag 4 0,8 mm: Das neue Lüftspiel ist mit 0,3 mm eingestellt.
      ⇒ Die Sattelposition ist um 0,1 mm zur Fahrzeuginnenseite verschoben.
b) am zuspannseitigen Bremsbelag 4 (LS = Lüftspiel; VP = Verpressung)
   Ausgangszustand: LS 0,4 mm
   Betätigungshub: 0,4 mm LS + 0,5 mm VP = 0,9mm
      ⇒ Die Krallfeder (Rückstellelement 10) rutscht 0,1 mm nach Rückhub Bremsbelag 4 0,8 mm: Das neue Lüftspiel ist mit 0,3 mm eingestellt.
      ⇒ Die Sattelposition ist um 0,1 mm zur Fahrzeuginnenseite verschoben. Rückhub Betätigung 0,9 mm
      ⇒ Aus der Rückhubdifferenz und der eingetretenen Veränderung der Sattelposition ergibt sich ein Spiel zwischen Belagrücken (Rücken des Belagträgers 5) und Druckstücken 8 von 0,2 mm.
      ⇒ Das Gesamtlüftspiel LS gesamt ergibt sich aus: LS außen + LS innen + LS Druckstück zu:
      ⇒ LS gesamt = 0,3 + 0,3 + 0,2 = 0,8 mm (Ausgangs-Gesamtlüftspiel)

### Zu B):

Ablauf einer Bremsung mit kaltem und vollständig verschlissenem Bremsbelag 4
a) am sattelseitigen Bremsbelag 4 (LS = Lüftspiel; VP = Verpressung)
   Ausgangszustand: LS 0,4 mm
   Betätigungshub: 0,4 mm LS + 0,1 mm VP = 0,5 mm
      ⇒ Der Betätigungshub ist kleiner als der an der Krallfeder eingestellte Maximalhub. D.h. die Krallfeder erreicht ihre Hubbegrenzung nicht. Es tritt kein Weiterrutschen der Krallfeder auf und damit auch keine Veränderung der Sattelposition.
      ⇒ Rückhub 0,5 mm
      ⇒ Neues Lüftspiel 0,4 mm = Ausgangslüftspiel
      ⇒ Die Sattelposition bleibt erhalten.
b) am zuspannseitigen Bremsbelag 4 (LS = Lüftspiel; VP = Verpressung)
   Ausgangszustand: LS 0,4 mm
   Betätigungshub: 0,4 mm LS + 0,1 mm VP = 0,5 mm
      ⇒ Anmerkung siehe oben unter a)
      ⇒ Rückhub 0,5 mm
      ⇒ Neues Lüftspiel 0,4 mm = Ausgangslüftspiel
      ⇒ Es entsteht kein zusätzliches Spiel zwischen Rücken des Belagträgers 5 und Druckstücken 8 sowie Sattelrücken 9.

### Fazit

Eine Veränderung des Lüftspiels tritt nur ein, wenn die Belagverpressung größer ist als die Differenz aus konstruktiv vorgehaltenem Rückhub minus dem vor der Bremsbetätigung tatsächlich vorhandenem Lüftspiel.

### Zu C):

Ablauf einer Bremsung im Zustand nach der unter A) beschriebenen Bremsung
a) sattelseitiger Bremsbelag (LS = Lüftspiel; VP = Verpressung)
   Ausgangslüftspiel: LS 0,3 mm
   Betätigungshub: 0,3 mm LS + 0,35 mm VP = 0,65 mm
      ⇒ Rückhub 0,65 mm
      ⇒ Neues Lüftspiel 0,3 mm

Die Sattelposition bleibt erhalten. D.h. auch das zwischen Druckstücken 8 und Rücken des Belagträgers 5 entstandene Spiel von 0,2 mm bleibt unverändert.

Eine Vergrößerung des Lüftspiels und eine darauf folgende Beseitigung des Spiels zwischen Druckstücken 8 und Rücken des Belagträgers 5 erfolgt erst durch eintretenden Belagverschleiß.

Das bei kalter Bremse durch Verschleiß entstehende maximal mögliche Lüftspiel ergibt sich aus der Differenz zwischen konstruktiv eingestelltem Rückhub der Krallfeder, also des Rückstellelementes 10, und der eintretenden Belagverpressung. Das maximal mögliche Lüftspiel ergibt sich somit mit verschlissenem, kaltem Bremsbelag 4. Setzt man hierzu die Bedingung nach B) an (0,1 mm Verpressung, Rückhub Betätigung 0,8 mm), so würde sich ein maximal mögliches Lüftspiel pro Bremsbelag 4 von 0,7 mm und somit ein maximal mögliches Gesamtlüftspiel von 1,4 mm einstellen. Da das Gesamtlüftspiel der Bremse jedoch durch die Nachstelleinrichtung der Bremse bestimmt wird, welches nach der getroffenen Voraussetzung 0,8 mm beträgt, wird der Lösehub der beiden Bremsbeläge 4 durch den Bremssattel auf diesen Betrag begrenzt.

Die Aufteilung dieses Gesamtlüftspiels auf die beiden Seiten kann nun vom Rückstellkraftniveau der jeweiligen Rückstellelemente 10 beeinflusst sein. Beim Lösen der Bremse werden zunächst die Druckstücke 8 durch die Betätigungsvorrichtung zurückgezogen, so dass der Bremsbelag 4 unter der rückstellenden Wirkung der Rückstellelemente 10 nahezu ungehindert folgen kann.

Der sattelseitige Bremsbelag 4 folgt nun ebenfalls der rückstellenden Wirkung der zugehörigen Rückstellelemente 10. Dabei muss jedoch der an diesem Bremsbelag 4 anliegende Bremssattel gegen die Reibwiderstände seiner Schiebeführung mit verschoben werden. Es wirken also die Rückstellelemente 10 der beiden Sattelseiten gegeneinander, wobei die Kraft der sattelseitigen Rückstellelemente 10 um den Reibewiderstand der Schiebeführung des Sattels reduziert ist. Die zuspannseitigen Rückstellelemente 10 können weiter expandieren und einen größeren Rückstellweg erzeugen.

Im ungünstigsten Fall wird der betätigungsseitige Bremsbelag 4 seinen maximal möglichen Rückstellhub ausführen und damit ein Lüftspiel auf seiner Seite von 0,7 mm einstellen. Damit verbleibt am sattelseitigen Belag immer noch ein Lüftspiel von 0,1 mm.

Diese Situation kann ausgeglichen werden, indem die sattelseitigen Rückstellelemente 10 mit entsprechend höherer Rückstellkraft ausgestattet werden. Zudem werden die Rückstellelemente 10 als Krallfedern beider Bremsbeläge 4 mit einer steifen Charakteristik ausgestattet, welche bewirkt, dass das Rückstellelement 10 mit dem größeren Hub einen stärkeren Kraftabfall verzeichnet, wodurch eine die Lüftspiele ausgleichende Wirkung erzielt wird. Infolge der Federkrafttoleranzen und der Streuung des Reibwiderstandes der Schiebeführung werden sich dennoch ungleiche Lüftspiele einstellen. Dies ist jedoch nicht von Belag, solange ein Mindestlüftspiel an beiden Seiten gewährleistet ist.

Die oben beschriebenen Ausführungsbeispiele schränken die Erfindung nicht ein, sondern die Erfindung ist im Rahmen der beigefügten Ansprüche modifizierbar.

Es ist denkbar, dass die Krallkante 11 zumindest teilweise eine Verzahnung mit Zahnspitzen für die Krallfunktion aufweist. Die Krallkante 11 kann auch zusätzlich gehärtet sein.

Es ist außerdem möglich, dass pro Belagrückenseite 5a mehr als ein Rückstellelement 10 angeordnet wird, z.B. nebeneinander oder/und übereinander.

### Bezugszeichenliste

- 1: Scheibenbremse
- 2: Bremsträger
- 2a: Führungsfläche
- 2b: Belagstopperführung
- 3: Bremsscheibe
- 3a: Bremsscheibenreibfläche
- 4: Bremsbelag
- 4a: Bremsbelagreibfläche
- 5: Belagträger
- 5a: Belagträgerseite
- 5b: Vertiefung
- 6, 6a: Lüftspiel
- 7: Zustellrichtung
- 8: Druckstück
- 8a: Anlageabschnitt
- 8b: Ausnehmung
- 9: Sattelrücken
- 10: Rückstellelement
- 10a: Befestigungsabschnitt
- 10b: Federabschnitt
- 10c, d: Bogenabschnitt
- 10e: Zwischenabschnitt
- 10f: Rückenabschnitt
- 11: Krallkante
- 12: Befestigungsende
- 12a: Endradius
- 13: Rückstellabschnitt
- 14: Befestigungsloch
- 14a: Durchbruch
- 15: Länge
- 16: Breite
- 17, 18: Befestigungsmaß
- 19: Befestigungselement
- 20: Begrenzungselement
- 20a: Führungsabschnitt
- 20b: Anlagefläche

## Patentansprüche

1. Scheibenbremse (1), insbesondere für ein Kraftfahrzeug, mit einer Zuspannvorrichtung, einem eine Bremsscheibe (3) übergreifenden Bremssattel, insbesondere ein Schiebesattel, vorzugsweise einer Belagverschleißnachstellvorrichtung, einem Bremsträger (2) mit in Umfangsrichtung der Bremsscheibe (3) gegenüberliegenden Führungsflächen (2a), zwischen welchen beidseitig der Bremsscheibe (3) jeweils mindestens ein Bremsbelag (4) mit einem Belagträger (5) parallel zu einer Drehachse der Bremsscheibe (3) verschiebbar geführt und von einer Zuspannkraft betätigbar ist, und mit jeweils einer Rückstelleinrichtung, welche den jeweils mindestens einen Bremsbelag (4) mit dem Belagträger (5) mit jeweils mindestens einem Rückstellabschnitt (13) an jeder Führungsfläche (2a) abstützt, wobei jede Rückstelleinrichtung mindestens zwei Rückstellelemente (10) umfasst, die an dem Rücken des Belagträgers (5) des jeweils mindestens einen Bremsbelags (4) angebracht sind,
**dadurch gekennzeichnet,**
**dass** die Rückstelleinrichtungen auf unterschiedlichen Seiten der Bremsscheibe (3) unterschiedlich hohe Rückstellkräfte aufweisen.

2. Scheibenbremse (1) nach Anspruch 1, **dadurch gekennzeichnet, dass** jedes der mindestens zwei Rückstellelemente (10) den jeweils mindestens einen Rückstellabschnitt (13) aufweist.

3. Scheibenbremse (1) nach Anspruch 2, **dadurch gekennzeichnet, dass** jedes der mindestens zwei Rückstellelemente (10) mit einem Befestigungsabschnitt (10a) und einem Federabschnitt (10b) ausgebildet ist, wobei der Federabschnitt (10b) an seinem freien Ende den Rückstellabschnitt (13) aufweist.

4. Scheibenbremse (1) nach Anspruch 3, **dadurch gekennzeichnet, dass** der Rückstellabschnitt (13) mit einer scharfen Kante als Krallkante (11) ausgebildet ist.

5. Scheibenbremse (1) nach Anspruch 3 oder 4, **dadurch gekennzeichnet, dass** der mindestens eine Rückstellabschnitt (13) jedes Rückstellelementes (10) in Längsrichtung des Belagträgers (5) über eine Belagträgerseite (5a) geringfügig zu der jeweiligen Führungsfläche (2a) des Bremsträgers (2) hinausragt
und mit der Krallkante (11) mit der Führungsfläche (2a) des Bremsträgers (2) in Eingriff steht.

6. Scheibenbremse (1) nach einem der Ansprüche 3 bis 5, **dadurch gekennzeichnet, dass** jedes der mindestens zwei Rückstellelemente (10) mit dem Befestigungsabschnitt (10a) auf dem Belagträger (5) befestigt ist, und der Federabschnitt (10b) mindestens teilweise von dem Belagträger (5) federnd hervorsteht.

7. Scheibenbremse (1) nach Anspruch 6, **dadurch gekennzeichnet, dass** eine Hubbewegung einer möglichen Ausfederung des Federabschnitts (10b) durch ein Begrenzungselement (20), ein Druckstück (8), eine Druckplatte oder einen Sattelrücken (9) begrenzt ist.

8. Scheibenbremse (1) nach Anspruch 7, **dadurch gekennzeichnet, dass** die Hubbewegung einer möglichen Ausfederung des Federabschnitts (10b) auf einen maximal erforderlichen Arbeitshub des Bremsbelags (4) begrenzt ist.

9. Scheibenbremse (1) nach einem der vorhergehenden Ansprüche, **dadurch gekennzeichnet, dass** jedes der mindestens zwei Rückstellelemente (10) in einer Vertiefung (5a) des Belagträgers (5) angeordnet ist.

10. Scheibenbremse (1) einem der vorhergehenden Ansprüche, **dadurch gekennzeichnet, dass** die Scheibenbremse (1) druckluftbetätigt ist.

11. Zuspannseitiger Bremsbelag (4) und sattelseitiger Bremsbelag (4) einer Scheibenbremse (1) nach einem der vorhergehenden Ansprüche, wobei der zuspannseitige Bremsbelag (4) und der sattelseitige Bremsbelag (4) jeweils eine Rückstelleinrichtung aufweisen, welche jeweils mindestens zwei Rückstellelemente (10) und Rückstellabschnitte (13) umfasst, und wobei die jeweiligen mindestens zwei Rückstellelemente (10) an einem Rücken eines Belagträgers (5) des jeweiligen Bremsbelags (4) angebracht sind, **dadurch gekennzeichnet, dass** die Rückstellelemente (10) des sattelseitigen Bremsbelags (4) mit einer höheren Rückstellkraft ausgestattet sind als die Rückstellelemente (10) des zuspannseitigen Bremsbelags (4).

## Claims

1. Disc brake (1), in particular for a motor vehicle, comprising an application device, a brake calliper, in particular a sliding calliper, overlapping a brake disc (3), preferably a pad wear adjusting device, an adapter (2) with guide surfaces (2a), which are placed opposite one another in the circumferential direction of the brake disc (3) and between which is guided on both sides of the brake disc (3) at least one brake pad (4) each with a backing plate (5) for displacement parallel to an axis of rotation of the brake disc (3), the brake pads (4) being actuable by an application force, and further comprising a resetting device each, which supports the at least one brake pad (4) with the backing plate (5) on each guide surface (2a) with at least one resetting section (13), wherein each resetting device comprises at least two resetting elements (10) fitted to the back of the backing plate (5) of the respective at least one brake pad (4),
**characterised in that**
the resetting devices have resetting forces of different value on different sides of the brake disc (3).

2. Disc brake (1) according to claim 1, **characterised in that** each of the at least two resetting elements (10) is provided with the at least one resetting section (13).

3. Disc brake (1) according to claim 2, **characterised in that** each of the at least two resetting elements (10) is formed with a mounting section (10a) and a spring section (10b), the spring section (10b) having the resetting section (13) at its free end.

4. Disc brake (1) according to claim 3, **characterised in that** the resetting section (13) is designed with a sharp edge acting as a claw edge (11).

5. Disc brake (1) according to claim 3 or 4, **characterised in that** the at least one resetting section (13) of each resetting element (10) slightly projects in the longitudinal direction of the backing plate (5) beyond a backing plate side (5a) towards the respective guide surface (2a) of the adapter (2) and, with the claw edge (11), is in engagement with the guide surface (2a) of the adapter (2).

6. Disc brake (1) according to any of claims 3 to 5, **characterised in that** each of the at least two resetting elements (10) is secured to the backing plate (5) with the mounting section (10a), and **in that** the spring section (10b) at least partially projects resiliently from the backing plate (5).

7. Disc brake (1) according to claim 6, **characterised in that** a lifting motion of a possible topping out of the spring section (10b) is limited by a limiting element (20), a pressure pad (8), a pressure plate of a calliper back (9).

8. Disc brake (1) according to claim 7, **characterised in that** the lifting motion of a possible topping out of the spring section (10b) is limited to a maximum required operating stroke of the brake pad (4).

9. Disc brake (1) according to any of the preceding claims, **characterised in that** each of the at least two resetting elements (10) is located in a recess (5a) of the backing plate (5).

10. Disc brake (1) according to any of the preceding claims, **characterised in that** the disc brake (1) is actuated pneumatically.

11. Application-side brake pad (4) and calliper-side brake pad (4) of a disc brake (1) according to any of the preceding claims, wherein the application-side brake pad (4) and the calliper-side brake pad (4) are each provided with a resetting device comprising at least two resetting elements (10) and resetting sections (13), and wherein the respective at least two resetting elements (10) are mounted on a back of a backing plate (5) of the respective brake pad (4), **characterised in that** the resetting elements (10) of the calliper-side brake pad (4) are provided with a higher resetting force than the resetting elements (10) of the application-side brake pad (4).

## Revendications

1. Frein à disque (1), en particulier pour un véhicule à moteur, comprenant un dispositif de serrage du frein, un étrier de frein chevauchant un disque de frein (3), en particulier un étrier coulissant, de préférence un moyen de rattrapage d'usure la garniture, un support de frein (2) aux aires de guidage opposées selon la direction périphérique dudit disque de frein (3), entre lesquelles, des deux côtés dudit disque de frein (3), au moins une garniture de frein (4) respective avec ledit support de garniture (5) est guidée de manière coulissante en parallèle à un axe de rotation dudit disque de frein (3), en étant actionnable par une force de serrage du frein, et comprenant au moins un moyen de rappel respectif, qui appuie ladite au moins une garniture de frein (4) respective avec ledit support de garniture (5) par au moins une partie de rappel (13) respective à chacune desdites aires de guidage (2a), à chaque moyen de rappel comprenant au moins deux éléments de rappel (10) qui sont fixés au dos dudit support de garniture (5) de ladite au moins une garniture de frein (4) respective,
**caractérisé en ce**
**que** lesdits moyens de rappel produisent des forces de rappel différentes aux côtés différents dudit disque de frein (3).

2. Frein à disque (1) selon la revendication 1, **caractérisé en ce que** chacun desdits au moins deux éléments de rappel (10) comprend ladite au moins une partie de rappel (13) respective.

3. Frein à disque (1) selon la revendication 2, **caractérisé en ce que** chacun desdits au moins deux éléments de rappel (10) est conçu à une partie de fixation (10a) et une partie à ressort (10b), à ladite partie à ressort (10b) comprenant ladite partie de rappel (13) à son extrémité libre.

4. Frein à disque (1) selon la revendication 3, **caractérisé en ce que** ladite partie de rappel (13) est configurée à une arête vive en tant qu'arête à griffe (11).

5. Frein à disque (1) selon la revendication 3 ou 4, **caractérisé en ce que** ladite au moins une partie de rappel (13) de chaque élément de rappel (10) fait saillie légèrement, en dépassant un côté dudit support de garniture (5a) vers ladite surface de guidage (2a) respective dudit support de frein (23), le long de la direction longitudinale dudit support de garniture (5), et se trouve en prise par ladite arête à griffe (11) avec ladite surface de guidage (2a) dudit support de frein (2).

6. Frein à disque (1) selon une quelconque des revendications 3 à 5, **caractérisé en ce que** chacun desdites au moins deux éléments de rappel (10) est fixé par ladite partie de fixation (10) audit support de garniture (5), et **en ce que** ladite partie à ressort (10b) fait saillie, de façon élastique, dudit support de garniture (5) au moins en partie.

7. Frein à disque (1) selon la revendication 6, **caractérisé en ce qu'**un mouvement de course d'un débattement concevable de ladite partie à ressort (10b) est limité par un élément limiteur (20), d'une pièce de pression (8), d'une plaque de pression ou d'un dos d'étrier (9).

8. Frein à disque (1) selon la revendication 7, **caractérisé en ce que** le mouvement de course d'un débattement concevable de ladite partie à ressort (10b) set limité à une course maximale requise de ladite garniture de frein (4).

9. Frein à disque (1) selon une quelconque des revendications précédentes, **caractérisé en ce que** chacun desdites au moins deux éléments de rappel (10) est disposé dans un évidement (5a) dudit support de garniture (5).

10. Frein à disque (1) selon une quelconque des revendications précédentes, **caractérisé en ce que** le frein à disque (1) est actionné par air comprimé.

11. Garniture de frein (4) du côté de serrage du frein et garniture de frein (4) du côté de l'étrier de frein d'un frein à disque (1) selon une quelconque des revendications précédentes, dans lequel ladite garniture de frein (4) du côté de serrage du frein et ladite garniture de frein (4) du côté dudit étrier comprennent un moyen de rappel respectif, qui comprend au moins deux éléments de rappel (10) et parties de rappel (13) respectifs, et dans lequel lesdits au moins deux éléments de rappel (10) respectifs sont fixés à un dos d'un support de garniture (5) de ladite garniture de frein (4) respective, **caractérisé en ce que** lesdits éléments de rappel (10) de ladite garniture de frein (4) du côté d'étrier sont conçus a une force de rappel plus grande que lesdits éléments de rappel (10) de ladite garniture de frein (4) du côté de serrage du frein.
